# EUROPÄISCHE PATENTSCHRIFT

(11) **EP 0 363 757 B1**
(45) Veröffentlichungstag und Bekanntmachung des Hinweises auf die Patenterteilung: **22.06.1994**
(21) Anmeldenummer: 89118110.9
(22) Anmeldetag: 29.09.1989
(51) Int. Cl.: C08F 8/32, C09D 201/02

(54) **Bindemittelkombinationen und ein Verfahren zur Herstellung von Flächengebilden**
Coupling agent compositions and process for the manufacture of flat materials
Compositions de liants et procédé de préparation de produits plats

(30) Priorität: 12.10.1988 DE 3834750
(43) Veröffentlichungstag der Anmeldung: 18.04.1990
(73) Patentinhaber: BAYER AG, 51368 Leverkusen (DE)
(72) Erfinder: Schäfer, Walter, Dr., D-5653 Leichlingen (DE); Rudolph, Hans, Prof. Dr., D-4150 Krefeld (DE); Dhein, Rolf, Dr., D-4150 Krefeld (DE); Müller, Hanns-Peter, Dr., D-5060 Bergisch-Gladbach 2 (DE); Sonntag, Michael, Dr., D-5068 Odenthal 3 (DE); Wamprecht, Christian, Dr., D-4040 Neuss 22 (DE); Blum, Harald, Dr., D-4175 Wachtendonk (DE); Krauss, Walter, Dr., D-5090 Leverkusen (DE)

(56) Entgegenhaltungen:
- EP-A- 0 181 603
- GB-A- 2 048 898
- US-A- 2 543 601
- US-A- 2 543 602

## Beschreibung

Die Erfindung betrifft neue Bindemittelkombinationen auf Basis von Carbonsäureanhydridgruppen aufweisenden Polymeren und von 4,5-Dihydrooxazolen und ein Verfahren zur Herstellung von Flächengebilden.

Die Umsetzung von intramolekularen Carbonsäureanhydriden mit 4,5-Dihydrooxazolen ist eine im Prinzip bekannte chemische Reaktion. Gemäß EP-A-01 81 603 entstehen hierbei beispielsweise in Gegenwart von Katalysatoren wie Phosphiten bei einer Reaktionstemperatur von oberhalb 100°C vernetzte Produkte, die allerdings gelb bis braun gefärbt sind, so daß die in dieser Veröffentlichung beschriebenen Systeme als Lackbindemittel weitgehend ungeeignet sind.

Die US-PS 2 543 602 beschreibt die Umsetzung von (i) Copolymerisation von Maleinsäureanhydrid mit anderen olefinisch ungesättigten Monomeren mit (ii) Bis-4,5-dihydrooxazolen, wobei die Umsetzung vorzugsweise bei oberhalb 50°C liegenden Temperaturen abläuft.

Auch eigene Versuche bestätigten, daß die Umsetzung von Maleinsäureanhydrid-Copolymerisaten mit 4,5-Dihydrooxazolen insbesondere im Falle der Verwendung von Copolymerisaten mit einem Maleinsäureanhydridgehalt von unter 25 Gew.-% nur sehr langsam abläuft (Gelierzeiten von mehreren Tagen), so daß die bekannten Systeme als Lackbindemittel für bei Raumtemperatur innerhalb weniger Stunden aushärtbare Beschichtungsmittel ungeeignet sind.

Wie jetzt jedoch gefunden wurde, gelingt es durch Zusatz von Ammoniak bzw. von primären oder sekundären Aminen, die Vernetzungsreaktion ganz erheblich zu beschleunigen, so daß wertvolle, bei Raumtemperatur rasch aushärtende Bindemittelkombinationen auf Basis von intramolekulare Carbonsäureanhydridgruppen aufweisenden Copolymerisaten und 4,5-Dihydrooxazolen zugänglich sind.

Gegenstand der Erfindung sind gegebenenfalls als Lösung in geeigneten Lösungsmitteln vorliegende Bindemittelkombinationen aus
a) intramolekulare Carbonsäureanhydridgruppen enthaltenden Polymeren eines mittleren Molekulargewichts Mw von 500 bis 25 000 und
b) 4,5-Dihydrooxazol-Gruppen aufweisenden organischen Verbindungen in einer Menge, die einem Äquivalentverhältnis von Carbonsäureanhydridgruppen zu 4,5-Dihydrooxazolgruppen von 0,5:1 bis 2:1 entspricht,
gekennzeichnet durch
c) einen Gehalt von 0,005 bis 6 Gew.-%, bezogen auf das Gewicht der Komponenten a) und b), an Ammoniak oder eines primären oder sekundären Amins.

Gegenstand der Erfindung ist auch ein Verfahren zur Herstellung von Flächengebilden durch Beschichtung beliebiger Substrate mit einem Beschichtungsmittel, welches neben einem Bindemittel die aus der Beschichtungstechnologie üblichen Hilfs- und Zusatzmittel enthält, dadurch gekennzeichnet, daß man ein Zweikomponenten-Beschichtungsmittel verwendet, welches als Bindemittel eine Bindemittelkombination der genannten Art enthält.

Bei der Komponente (a) der erfindungsgemäßen Bindemittelkombinationen handelt es sich um an sich bekannte Copolymerisate von olefinisch ungesättigten, intramolekularen Carbonsäurehydriden wie beispielsweise Maleinsäureanhydrid, Itaconsäureanhydrid oder Bicyclo(2.2.1)hepten-5,6-dicarbonsäureanhydrid, vorzugsweise von Maleinsäureanhydrid mit anderen olefinisch ungesättigten Monomeren wie beispielsweise Ethylen, Propylen, Styrol oder Alkylestern der Acryl- bzw. Methacrylsäure mit 1 bis 8, vorzugsweise 1 bis 4 Kohlenstoffatomen im Alkylrest. Die Copolymerisate weisen im allgemeinen einen Gehalt an Carbonsäureanhydridgruppen der Formel 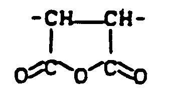
von 3 bis 25, vorzugsweise 5 bis 15 Gew.-% auf. Ihr nach der Gelpermeationschromatographie bestimmbares mittleres Molekulargewicht Mw liegt im allgemeinen bei 1000 bis 25000, vorzugsweise bei 2000 bis 15000.

Bei der Komponente b) der erfindungsgemäßen Bindemittelkombinationen handelt es sich um beliebige organische Verbindungen, die mindestens eine Struktureinheit der Formel 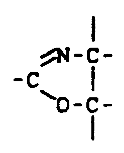
aufweisen, vorzugsweise um 4,5-Dihydrooxazole der allgemeinen Formel 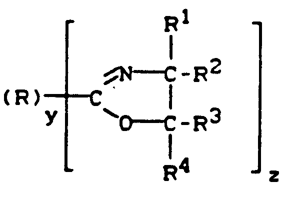
in welcher
- R: für Wasserstoff oder einen z-wertigen, gegebenenfalls olefinische Doppelbindungen, Ether- und/oder Hydroxylgruppen aufweisenden Kohlenwasserstoffrest, vorzugsweise für einen aliphatischen oder cycloaliphatischen Kohlenwasserstoffrest mit 1 bis 25, insbesondere 2 bis 8 Kohlenstoffatomen steht,
- R¹, R², R³ und R⁴: für gleiche oder verschiedene Reste stehen und Wasserstoff, Alkylreste mit 1 bis 5 Kohlenstoffatomen oder Arylreste mit 6 bis 10 Kohlenstoffatomen bedeuten, wobei jedoch vorzugsweise zumindest R¹ und R², besonders bevorzugt alle Reste R¹ bis R⁴ für Wasserstoff stehen, und wobei, ebenfalls bevorzugt, höchstens einer der Reste für einen Arylrest steht,
- y: für 1 steht oder im Falle von z = 2 auch für 0 stehen kann und
- z: für eine ganze Zahl von 1 bis 5, vorzugsweise 1 oder 2 steht.

Für das erfindungsgemäße Verfahren gut geeignete 4,5-Dihydrooxazole sind beispielsweise 4,5-Dihydrooxazol, 2-Methyl-4,5-dihydrooxazol, 2-Ethyl-4,5-dihydrooxazol, 2-Propyl-4,5-dihydrooxazol, 2-Butyl-4,5-dihydrooxazol, 2-Vinyl-4,5-dihydrooxazol, 2-(1-Methylvinyl)-4,5-dihydrooxazol, 2,2′-Bis[2-(4,5-dihydrooxazol)], 1,2-Bis[2-(4,5-dihydrooxazolyl)]ethan, 1,3- bzw. 1,2-Bis[2-(4,5-dihydrooxazolyl)]propan, 1,3- bzw. 1,4-Bis[2-(4,5-dihydrooxazolyl)]butan, 1,5-Bis[2-(4,5-dihydrooxazolyl]pentan, 1,6-Bis[2,-(4,5-dihydrooxazolyl]hexan, 1,4-Bis[2-(4,5-dihydrooxazolyl)]cyclohexan, 1,8-Bis[2-(4,5-dihydrooxazolyl)]octan, Vinylcopolymerisate von 2-Vinyl-4,5-dihydrooxazolen mit Styrol und Acrylsäureester.

Bis[2-(4,5-dihydrooxazole)] der beispielhaft genannten Art werden besonders bevorzugt als Komponente b) verwendet.

Bei der Komponente c) handelt es sich vorzugsweise um Ammoniak oder um organische Amine, die eine primäre oder sekundäre Aminogruppe aufweisen. Bei den bevorzugt als Komponente c) einzusetzenden Verbindungen handelt es sich um solche der allgemeinen Formel

R⁵ - NH - R⁶

in welcher
- R⁵: für einen, gegebenenfalls Etherbrücken oder tertiäre Aminstickstoffatome als Brückenglieder und/oder gegebenenfalls Hydroxylgruppen als Substituenten aufweisenden aliphatischen Kohlenwasserstoffrest mit insegesamt 1 bis 12 Kohlenstoffatomen steht und
- R⁶: für Wasserstoff oder einen Rest steht, der bezüglich seiner Definition der Definition von R⁵ entspricht.

Geeignete Komponenten c) sind beispielsweise Ammoniak, Methylamin, Ethylamin, n-Propylamin, n-Butylamin, tert.-Butylamin, Ethanolamin, Diethanolamin, 1-Amino-3-(dimethylamino)-propan, Di-n-butylamin oder N-Methyl-aminoethanol.

Die Verwendung von primären oder sekundären Polyaminen ist im Prinzip zwar ebenfalls möglich, jedoch führt dies leicht zu Verquallungen des Ansatzes, so daß die Mitververwendung derartiger höherfunktioneller Polyamine weniger bevorzugt ist.

In den erfindungsgemäßen Bindemittelkombinationen werden die Mengenverhältnisse der Komponenten a) und b) so gewählt, daß das Molverhältnis von Carbonsäureanhydridgruppen der Komponente a) zu 4,5-Dihydrooxazolgruppen der Komponente b) bei 0,5:1 bis 2:1, vorzugsweise 0,8:1 bis 1,2:1 liegt. Besonders bevorzugt werden die Komponenten in äquivalenten Mengen eingesetzt.

Die Menge der Komponente c) in den erfindungsgemäßen Bindemittelkombinationen liegt bei 0,005 bis 6, vorzugsweise 0,01 bis 3 Gew.-%, bezogen auf das Gewicht der Komponenten a) und b).

Die Herstellung der erfindungsgemäßen Bindemittelkombinationen erfolgt vorzugsweise in den üblichen Lösungsmitteln wie beispielsweise Ethanol, Propanol, Butanol, Methylethylketon, Essigsäureethylester, Essigsäurebutylester, technisches Methoxypropylacetat, Dimethylformamid, Methoxybutylacetat, Dimethylformamid, N-Methylpyrrolidon, Xylol oder Gemischen derartiger Lösungsmittel, wobei auch Wasser gegebenenfalls anteilig mitverwendet werden kann.

Zur Herstellung der erfindungsgemäßen Bindemittelkombinationen wird im allgemeinen so verfahren, daß die Komponente b) in Substanz oder in gelöster Form der vorab gelösten Komponente a) zugesetzt wird, worauf sich die Zugabe der Komponente c) anschließt. Der Reaktionsbeschleuniger c) kann aber auch zusammen, d.h. in Abmischung mit der Komponente b) der vorgelegten Komponente a) zugegeben werden. Die so erhaltenen erfindungsgemäßen Bindemittelkombinationen stellen wertvolle Bindemittel zur Herstellung von Flächengebilden der unterschiedlichsten Art dar. In Abhängigkeit von der chemischen Konstitution der Komponenten a) und b), sowie in Abhängigkeit von der Art und Menge der Komponente c) stellen die Systeme innerhalb eines Zeitraums von wenigen Sekunden bis wenigen Tagen bei Raumtemperatur aushärtende Zweikomponenten-Bindemittel dar.

Der Begriff "Flächengebilde" soll im Rahmen der Erfindung sowohl Lacküberzüge auf beliebigen Substraten wie z.B. Metallen, Holz, Papier, Textilien, Leder oder mineralischen Substraten als auch Glasfaserschlichte als auch Klebstoffschichten auf miteinander zu verklebenden Substraten umfassen. Die erfindungsgemäßen Bindemittelkombinationen eignen sich demzufolge zur Herstellung von Lackschichten auf Substraten der beispielhaft genannten Art, für die Lederzurichtung, für die Herstellung von Glasfaserschlichten oder auch zur Herstellung von Verbundmaterialien durch Verkleben von Substraten der unterschiedlichsten Art.

Vorzugsweise werden die erfindungsgemäßen Bindemittelkombinationen in Beschichtungsmitteln zur Herstellung von Lacküberzügen verwendet. Bei dieser bevorzugten Variante des erfindungsgemäßen Verfahrens können die erfindungsgemäßen Bindemittelkombinationen nicht nur zusammen mit den im allgemeinen ohnehin vorliegenden Lösungsmitteln sondern auch zusammen mit den aus der Beschichtungstechnologie üblichen Hilfs- und Zusatzmitteln wie beispielsweise Verlaufhilfsmitteln, Füllstoffen, Pigmenten u.dgl. zum Einsatz gelangen.

In den nachfolgenden Beispielen beziehen sich alle Prozentangaben auf Gewichtsprozente.

### Beispiel 1

167 g einer 60 %igen Lösung eines Copolymerisats des mittleren Molekulargewichts Mw 12000 aus 10 % Maleinsäureanhydrid, 30 % Styrol, 30 % Methylmethacrylat und 30 % Butylacrylat in Butylacetat werden mit 86 g einer Xylol-Butylacetatmischung (1:1) verdünnt. Anschließend werden 8 g 1,4-Bis[2-(4,5-dihydrooxazolyl)]butan als 50 %ige Lösung in Methylethylketon, die ca. 0,15 % Aminoethanol enthält, zugesetzt. Äquivalentverhältnis Anhydridgrupen:Dihydrooxazolgruppen = 1,25:1.

Der auf eine Glasplatte in einer Schichtdicke von 120 » aufgerakelte Klarlack zeigt folgende Eigenschaften nach einer Trockenzeit (23°C) von 24 h bis 5 Tagen.

| | 24 h | 5 d |
|---|---|---|
| Pendelhärte [s] (DIN 53157) | 80 | 108 |
| Benzinfestigkeit (1- bzw. 5-minütiges Einwirken eines Benzingetränkten Wattebauschs, o = unverändert, 5 = zerstört) | 1/5 | 0/1 |

### Vergleichsbeispiel 1

Beispiel 1 wird wiederholt mit dem einzigen Unterschied, daß der Lösung kein primäres Amin (Aminoethanol) zugesetzt wird. Der auf eine Glasplatte in einer Schichtdicke von 120 » aufgerakelte Klarlack zeigt folgende Eigenschaften nach einer Trockenzeit (23°C) von 24 h bzw. 5 Tagen.

| | 24 h | 5 d |
|---|---|---|
| Pendelhärte [s] (DIN ) | 64 | 74 |
| Benzinfestigkeit (1- bzw. 5-minütiges Einwirken eines Benzingetränkten Wattebauschs, o = unverändert, 5 = zerstört) | 2/5 | 1/3 |

### Beispiel 2

In 52 g eines Copolymerisats des Molekulargewichts Mw = 10000 aus 11 % Maleinsäureanhydrid, 15 % Styrol, 32 % Methylmethacrylat, 42 % n-Butylacrylat, gelöst zu 65 % in einer Mischung aus Xylol/Butylacetat 1:1, werden 2,3 g 1,4-Bis[2-(4,5-dihydrooxazolyl]butan, gelöst in 5,3 g Aceton, gegeben. Anschließend werden noch 0,35 g Aminoethanol als Reaktionsbeschleuniger zugefügt. Die Lösung der Bindemittelkombination geliert bei Raumtemperatur nach einem Zeitraum von 5 h.

### Vergleichsbeispiel 2

Beispiel 2 wird wiederholt mit dem einzigen Unterschied, daß der Lösung kein Aminoethanol zugesetzt wird. Die Lösung der Bindemittelkombination geliert bei Raumtemperatur erst nach einem Zeitraum von 52 h.

### Beispiel 3

In 52 g des Copolymerisats gemäß Beispiel 2, gelöst zu 65 % in einer Mischung aus Xylol/Butylacetat 1:1, werden 4,6 g 1,4-Bis[2-(4,5-dihydrooxazolyl)]butan, gelöst in 10,6 g ceton, gegeben. Anschließend werden noch 0,7 g Aminoethanol als Reaktionsbeschleuniger zugefügt. Die Lackbindemittelmischung geliert bei Raumtemperatur innerhalb einer Stunde.

### Beispiel 4

In 48 g eines Copolymerisats des Molekulargewichts Mw = 8000 aus 20 % Maleinsäureanhydrid, 15 % Styrol, 27 % Methylmethacrylat, 38 % Butylacrylat, gelöst zu 60 % in Methoxypropylacetat, werden 10 g 1,4-Bis[2-(4,5-dihydrooxazolyl)]butan, gelöst in 30 g Dimethylformamid, gegeben. Anschließend werden noch 3 g Propylamin als Reaktionsbeschleuniger zugefügt. Die Lackbindemittelmischung ist nach 2 h geliert.

### Beispiel 5

In 48 g des Copolymerisats gemäß Beispiel 4, gelöst zu 60 % in Methoxypropylacetat, werden 10 g 1,2-Bis[2-(4,5-dihydrooxazolyl)]ethan und 0,1 g Aminoethanol, gelöst in Dimethylformamid, gegeben. Die Lackbindemittelmischung ist bei Raumtemperatur innerhalb von 5 min geliert.

### Beispiel 6

In 48 g eines Copolymerisats des Molekulargewichts Mw = 7000 aus 25 % Maleinsäureanhydrid, 15 % Styrol, 17 % Methylmethacrylat, 33 % n-Butylacrylat, gelöst zu 60 % in Methoxypropylacetat, werden 10 g 2-Ethyl-4,5-dihydrooxazol, gelöst in 30 g Dimethylformamid, gegeben.

Anschließend werden noch 1 g einer mit Ammioniak gesättigten Acetonlösung als Reaktionsbeschleuniger zugegeben. Die Lackbindemittelmischung ist bei 23°C nach 2 h geliert.

## Patentansprüche

1. Gegebenenfalls als Lösung in geeigneten Lösungsmitteln vorliegende Bindemittelkombinationen aus
a) intramolekulare Carbonsäureanhydridgruppen enthaltenden Polymeren eines mittleren Molekulargewichts Mw von 500 bis 25 000 und
b) 4,5-Dihydrooxazol-Gruppen aufweisenden organischen Verbindungen in einer Menge, die einem Äquivalentverhältnis von Carbonsäureanhydridgruppen zu 4,5-Dihydrooxazolgruppen von 0,5:1 bis 2:1 entspricht,
gekennzeichnet durch
c) einen Gehalt von 0,005 bis 6 Gew.-%, bezogen auf das Gewicht der Komponenten a) und b), an Ammoniak oder eines primären oder sekundären Amins.

2. Bindemittelkombinationen gemäß Anspruch 1, dadurch gekennzeichnet, daß sie als Komponente c) mindestens eine Verbindung der allgemeinen Formel
R⁵ - NH - R⁶
enthalten, wobei
R⁵ für einen, gegebenenfalls Etherbrücken oder tertiäre Aminstickstoffatome als Brückenglieder und/oder gegebenenfalls Hydroxylgruppen als Substituenten aufweisenden aliphatischen Kohlenwasserstoffrest mit insgesamt 1 bis 12 Kohlenstoffatomen steht und
R⁶ für Wasserstoff oder einen Rest steht, der bezüglich seiner Definition der Definition von R⁵ entspricht.

3. Verfahren zur Herstellung von Flächengebilden durch Beschichtung beliebiger Substrate mit einem Beschichtungsmittel, welches neben einem Bindemittel die aus der Beschichtungstechnologie üblichen Hilfs- und Zusatzmittel enthält, dadurch gekennzeichnet, daß man ein Zweikomponenten-Beschichtungsmittel verwendet, welches als Bindemittel eine Bindemittelkombination gemäß Anspruch 1 enthält.

## Claims

1. Binder combinations, optionally present in the form of solutions in suitable solvents, of
a) polymers containing intramolecular carboxylic anhydride groups and having an average molecular weight Mw of 500 to 25,000 and
b) organic compounds containing 4,5-dihydrooxazole groups in a quantity corresponding to an equivalent ratio of carboxylic anhydride groups to 4,5-dihydrooxazole groups of 0.5:1 to 2:1,
characterized by
c) a content of 0.005 to 6% by weight, based on the weight of components a) and b), of ammonia or a primary or secondary amine.

2. Binder combinations as claimed in claim 1, characterized in that they contain at least one compound corresponding to the following general formula
R⁵ - NH - R⁶
in which
R⁵ is a hydrocarbon radical with a total of 1 to 12 carbon atoms optionally containing ether bridges or tertiary amine nitrogen atoms as bridge members and/or optionally hydroxyl groups as substituents and
R⁶ is hydrogen or a radical corresponding in its definition to the definition of R⁵,
as component c).

3. A process for the production of flat materials by coating of substrates with a coating composition which, in addition to a binder, contains the auxiliaries and additives typically used in coating technology, characterized in that a two-component coating composition containing the binder combination claimed in claim 1 as binder is used.

## Revendications

1. Combinaisons de liants éventuellement présentes sous forme d'une solution dans les solvants convenables, combinaisons formées par :
a) des polymères contenant des groupes anhydrides d'acides carboxyliques intramoléculaires et présentant un poids moléculaire moyen Mₚ de 500 à 25 000, et
b) par des composés organiques présentant des groupes 4,5-dihydro-oxazoles, présents en une quantité correspondant à un rapport entre les équivalents des groupes anhydride d'acide carboxylique et des groupes 4,5-dihydro-oxazoles compris entre 0,5:1 à 2:1,
combinaisons caractérisées par
c) une teneur de 0,005 à 6% en poids, par rapport au poids des constituants (a) et (b), d'ammoniac ou d'une amine primaire ou secondaire.

2. Combinaisons de liants selon la revendication 1, caractérisées en ce qu'elles contiennent comme constituant (c) au moins un composé de formule générale :
R⁵ - NH - R⁶
dans laquelle,
R⁵ représente un reste d'hydrocarbure aliphatique comportant au total 1 à 12 atomes de carbone et présentant éventuellement des ponts éther ou des atomes d'azote d'amines tertiaires comme terme de pontage et/ou éventuellement des groupes d'hydroxyle comme substituant, et
R⁶ représente un atome d'hydrogène ou un reste dont la définition correspond à la définition de R⁵.

3. Procédé pour produire des objets plats par enduction de revêtement de substrats quelconques à l'aide d'un produit de revêtement qui contient, en plus d'un liant, les adjuvants et additifs usuels dans la technologie du revêtement, procédé caractérisé en ce qu'on utilise un produit à deux constituants pour du revêtement, ce produit contenant comme liant une combinaison de liants selon la revendication 1.
